**Europäisches Patentamt**

**European Patent Office**

**Office européen des brevets**

(19)

(11) Veröffentlichungsnummer : **0 095 815 B1**

(12) # EUROPÄISCHE PATENTSCHRIFT

(45) Veröffentlichungstag der Patentschrift :
14.02.90

(21) Anmeldenummer : **83200766.0**

(22) Anmeldetag : **31.05.83**

(51) Int. Cl.⁵ : **G 11 B 15/66**, G 11 B 15/10

(54) Steuervorrichtung für das Laufwerk eines Magnetbandkassettengerätes.

**Teilanmeldung 88111002 eingereicht am 09.07.88.**

(30) Priorität : 02.06.82 DE 3220634
30.04.83 DE 3315822

(43) Veröffentlichungstag der Anmeldung :
**07.12.83 Patentblatt 83/49**

(45) Bekanntmachung des Hinweises auf die Patenterteilung : **14.02.90 Patentblatt 90/07**

(84) Benannte Vertragsstaaten :
**CH DE FR GB IT LI NL SE**

(56) Entgegenhaltungen :
**GB--A-- 2 045 995**
**US--A-- 3 882 542**
**US--A-- 4 163 997**
**GRUNDIG TECHNISCHE INFORMATIONEN, Band 30, Nr. 1, März 1983, Seiten 12-19, Regensburg, DE; D. ELSÄSSER: "CL 200, ein neues microcomputergesteuertes Laufwerk für Compact-Cassetten"**

(73) Patentinhaber : **Philips Patentverwaltung GmbH**
**Wendenstrasse 35 Postfach 10 51 49**
**D-2000 Hamburg 1 (DE)**
**DE**
**N.V. Philips' Gloeilampenfabrieken**
**Groenewoudseweg 1**
**NL-5621 BA Eindhoven (NL)**
**CH FR GB IT LI NL SE**

(72) Erfinder : **Kommoss, Klaus**
**Am Rabenbaum 26**
**D-6330 Wetzlar-Naunheim (DE)**

(74) Vertreter : **Kupfermann, Fritz-Joachim, Dipl.-Ing. et al**
**Philips Patentverwaltung GmbH Wendenstrasse 35**
**Postfach 10 51 49**
**D-2000 Hamburg 1 (DE)**

## Beschreibung

Die Erfindung bezieht sich auf eine Steuervorrichtung für das Laufwerk eines Magnetbandkassettengerätes zum Steuern von Laufwerksfunktionen einschließlich des Einziehens und Auswerfens einer Kassette mittels eines mit einem Motor ausgerüsteten Antriebes, der eine von dem Motor in Einschub- bzw. Ausschubrichtung der Kassette längsverschiebliche, mit Schaltern zusammenwirkende Stange umfaßt, wobei auf mechanische Weise Laufwerksfunktionen einstellbar sind.

Aus Grundig Technische Informationen, Vol. 30 (1983) N° 1 ist ein Steuermechanismus zur Steuerung von Funktionen in einem Magnetbandkassettengerät bekannt. Der Steuermechanismus weist eine Kurvenscheibe mit Schleifkontaktsegmenten auf, die von Schleifkontakten einer Schalterscheibe abfahrbar sind. Beim Abfahren der Schleifkontaktsegmente lassen sich die Funktionen des Laufwerkes elektrisch steuern. Dazu werden die von den Schleifkontaktsegmenten ausgelesenen elektrischen Werte einem Mikroprozessor zugeleitet, der den Servomotor für die Laufwerksfunktionen steuert. Das Laufwerk ist jedoch mit keinem Kasetteneinzug ausgerüstet. Damit fehlen auch die steuerungstechnischen Voraussetzungen für einen Einsatz mit automatischem Kasetteneinzug.

Aus der US-A 38 82 542 ist ein Laufwerk für ein Magnetbandkassettengerät mit automatischem Kasetteneinzug bekannt. Das Gerät weist eine Stange auf, die dem Einzug einer Magnetbandkassette dient. Die Stange läuft dazu beim Einziehen mit der Magnetkbandkassette bis zu einem am Ende der Einzugsbewegungsbahn gelegenen Endpunkt und bleibt dort stehen. Ein von der Stange angestoßener Schalter schaltet den Motor für den Spielbetrieb an, und ein Getriebe übernimmt das Abspielen des Magnetbandes. Der Endpunkt wird von einem Stift bestimmt, der den Motorschalter schaltet und gleichzeitig ein Servogetriebe umschaltet, das damit vorbereitet wird, die Kassette in der umgeschalteten Drehrichtung wieder auszuschieben, wenn das Band am Bandende zum Stillstand gekommen ist. Eine derartige Stange und das Getriebe bilden keinen Servoantrieb, weil keine verschiedenen Steuerfunktionen ausgeübt werden.

Es ist Aufgabe der Erfindung, eine Steuervorrichtung der eingangs erwähnten Art zu schaffen, bei der die Lageorientierung der Steuerstange für mehrere im Betrieb anzusteuernde Laufwerksfunktionen genau definiert ist.

Die gestellte Aufgabe ist erfindungsgemäß dadurch gelöst, daß
der Motor als Servomotor reversierbar ausgebildet ist und von einer Mikroprozessor-Steuerschaltung gesteuert wird,
zwischen den Endpunkten der Bewegungsbahn der Steuerstange im Abstand voneinander liegende weitere, von einem mit der Steuerstange zusammenwirkenden Schaltgeber markierte Schaltpunkte für Spiel- und Schnellspulfunktionen vorgesehen sind, an denen die Steuerstange ihrerseits über den Schaltgeber und die Schaltung die Laufwerksfunktionen in Betrieb setzt,
die Steuerstange beim Anhalten an den Schaltpunkten die diesen zugeordneten Laufwerksfunktionen in Betrieb setzt,
die Steuerstange bei der Einstellung einer neuen Laufwerksfunktion zu ihrer genauen Lagebestimmung zuerst zum Referenz-Endpunkt am Ende des Einfahrweges läuft, dort die Mikroprozessor-Steuerschaltung bezüglich der Stellung der Steuerstange orientiert und zu den gewünschten Schaltpunkten zurückläuft.

Wenn der Mikroprozessor am Referenz-Endpunkt orientiert wird, dann weiß er unabhängig von seinem vorherigen Schaltzustand, wenn er beim Rückwärtslaufen Schaltpunkte erreicht, was er an den entsprechenden Schaltpunkten zu veranlassen hat. Die Schaltung des Laufwerkes kann so exakt gesteuert werden.

Nach einer weiteren Ausgestaltung der Erfindung ist vorgesehen, daß der Referenzpunkt von einem Anschlag gebildet wird, der die Schiebebewegung der Steuerstange begrenzt. Bei allen zweifelhaften Funktionsstellungen, beispielsweise bei einem zwischenzeitlichen Ausschalten, können sich die Steuerstange und die Steuerschaltung so eine genaue Orientierung verschaffen. Außerdem kann mit dem Anschlag eine Umkehrung des Servomotors bewirkt werden.

Nach einer weiteren Ausgestaltung der Erfindung ist vorgesehen, daß die Steuerstange mit einer Kulisse versehen ist, mittels der ein Rastmechanismus für die Kopfträgerplatte wirksam bzw. unwirksam machbar ist. Damit wird der Vorteil erhalten, daß über den Rastmechanismus weitere Servomechanismen des Laufwerkes gesteuert werden. Dazu gehört beispielsweise ein Riegelmagnet, der einen Rasthebel nach seinem Verstellen mittels der Kulisse in der Wirkstellung für den Rastmechanismus festhält. Der Vorteil dieses Aufbaues ist, daß auf einfache Weise eine Stand-by-Stellung der Kopfplatte geschaffen werden kann, in der die von der Kopfplatte getragene Druckrolle von der Tonwelle abgehoben wird im Falle einer Stromunterbrechung.

Bei einer weiteren Ausführungsform der Erfindung ist vorgesehen, daß parallel zur Verschieberichtung der Steuerstange eine vom Servomotor gedrehte Gewindespindel angeordnet ist, mittels der die Steuerstange in ihre Betriebspositionen verfahrbar ist. Eine derartige Gewindespindel hat eine starke Selbsthemmung und ist sehr raumsparend.

Nach einer Weiterbildung der Erfindung ist vorgesehen, daß mit der Gewindespindel ein Impulsmagnet umläuft, dessen Impulse von einem als Schaltgeber wirkenden Hallelement aufgenommen und an die Steuerschaltung weitergegeben werden, die dadurch in der Lage ist, die Rotationen der Spindel zu zählen. Ein derartiger Impulsmagnet in Verbindung mit einem Hallelement ist außerordentlich kompakt und sehr geeignet, mit einer Steuerschaltung in Form eines Mikroprozessors zusammenzuarbeiten.

Nach einer weiteren Ausgestaltung der Erfindung ist vorgesehen, daß die Steuerstange mit einem Steueranschlag versehen ist, der abhängig von seine Lage ein Schnellspulgetriebe steuert.

Weiterhin kann die Steuerstange eine Anschlagkante aufweisen, die die Bewegung der Kopfplatte in Richtung auf das Magnetband begrenzt für die Zeit, in der Schnellspulfunktionen ausgeübt werden.

Die Erfindung wird anhand der in den Zeichnungen dargestellten Ausführungsbeispiele näher erläutert. Es zeigen :

Fig. 1 eine Ansicht einiger Teile des Magnetbandkassettengerätes von der Antriebsseite her,

Fig. 2A eine schaubildlich vergrößerte Darstellung eines Rastmechanismus des Gerätes gemäß Fig. 1 in einer ersten Lage,

Fig. 2B den Rastmechanismus nach Fig. 2A in einer zweiten Lage,

Fig. 3 einige Teile des Magnetbandkassettengerätes gemäß Fig. 1 von der Tonkopfseite her gesehen in einer Spielstellung in einer ersten Bandlaufrichtung,

Fig. 4 einige Teile des Magnetbandkassettengerätes gemäß Fig. 1 von der Tonkopfseite her gesehen in einer zu Fig. 3 entgegengesetzten Bandlaufrichtung,

Fig. 5 das Zusammenwirken einer Leitschlitzanordnung des Gerätes gemäß Fig. 1 mit Steuermitteln für die Umschaltung der Bandlaufrichtung und Kopfplatte in einer Explosionsdarstellung,

Fig. 6 die verschiedenen Lagen einer Steuerplatte zur Steuerung der Leitschlitzanordnung und der Kopfplatte gemäß Fig. 5,

Fig. 7 eine schaubildliche Darstellung der Steuervorrichtung, wie das Ausführungsbeispiel des Gerätes nach den Fig. 1 bis 6 mit weiteren, schematisch dargestellten Einzelteilen des Gerätes,

Fig. 8 das Schnellspulgetriebe des Gerätes nach den Fig. 1 bis 7 in drei verschiedenen Stellungen.

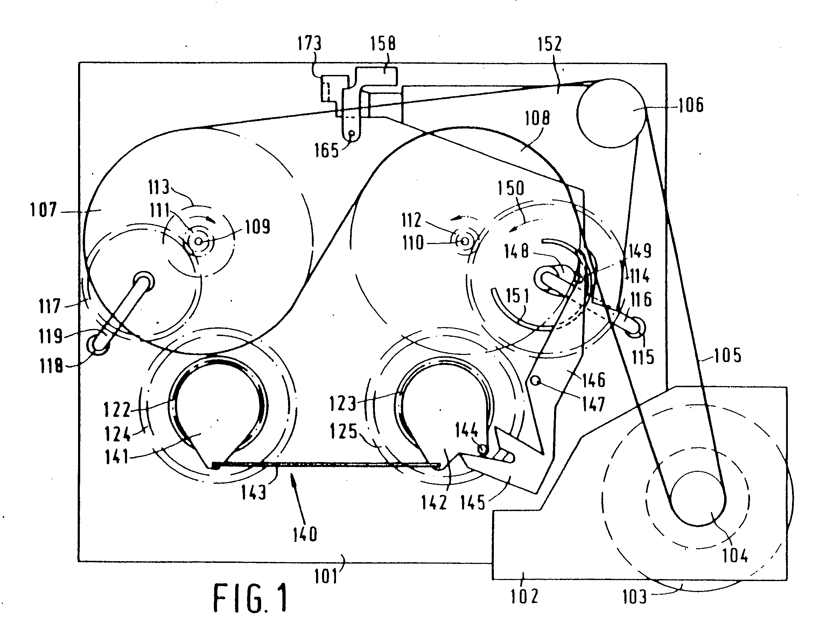

Das Magnetbandkassettengerät, das in Fig. 1 bis 8 dargestellt ist, weist ein Gestell 101 auf, das über eine Stütze 102 einen nur in einer Richtung umlaufenden Antriebsmotor 103 trägt. Das Antriebsritzel 104 des Motors 103 führt eine Peese 105, die über eine Umlenkrolle 106 über Schwungräder 107 und 108 derart geführt ist, daß die Schwungräder gegensinnig drehen. Die Schwungräder 107 und 108 sind im Gestell 101 gelagert. Die Schwungscheibe 107 ist fest verbunden mit einer Tonwelle 109, und die Schwungscheibe 108 ist fest verbunden mit einer Tonwelle 110. Weiterhin ist die Schwungscheibe 107 mit einem Zahnrad 111 verbunden und ist die Schwungscheibe 108 mit einem Zahnrad 112 verbunden. Über eine Rutschkupplung ist koaxial zu dem Zahnrad 111 ein weiteres Zahnrad 113 auf der Schwungscheibe 108 drehbar angeordnet. Mit dem Zahnrad 112 auf der Schwungscheibe 108 ist ständig kämmend ein als Zahnrad ausgebildetes Schaltrad 113 in Eingriff. Dieses Zahnrad 114 ist schwenkbar um eine Achse 115. Die Achse 115 trägt einen in Fig. 1 schematisch dargestellten Schwenkarm 116, auf dem drehbar das Schaltrad 114 gelagert ist. In ähnlicher Weise kämmt mit dem Zahnrad 111 ständig ein Zahnrad 117. Dieses Zahnrad 117 ist drehbar um eine Schwenkachse 118 mittels eines schematisch dargestellten Schwenkarmes 119.

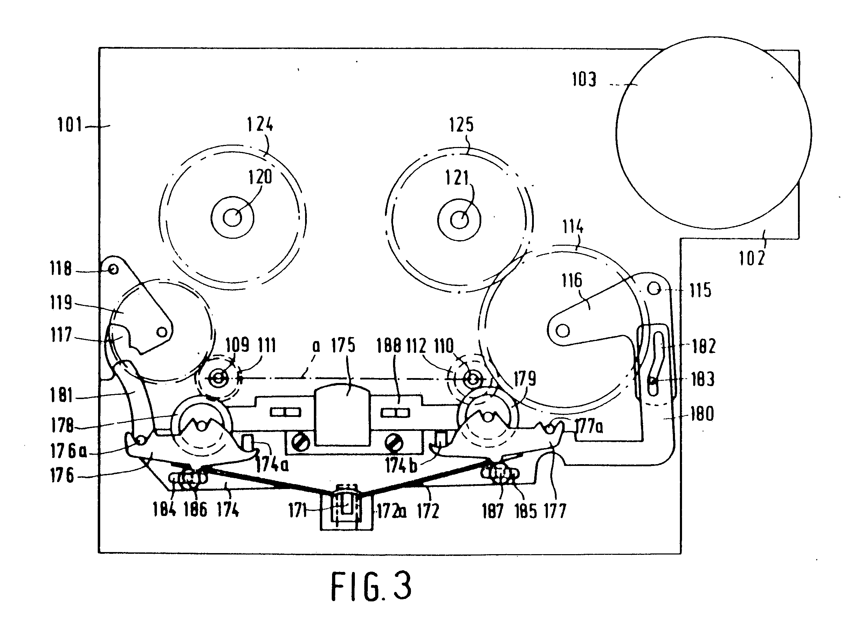

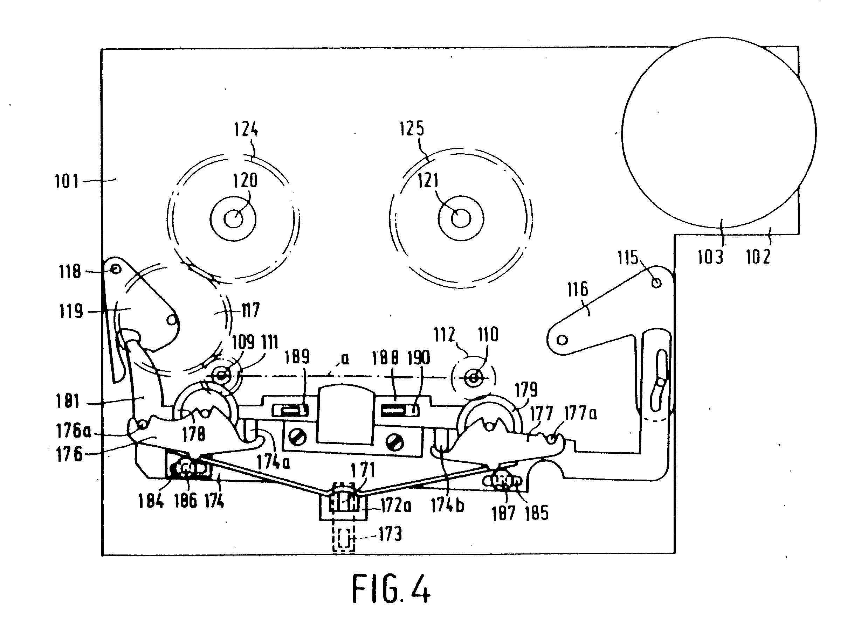

Wie auch in Fig. 3 und 4 dargestellt, sind drehbar im Gestell 101 Wickeldorne 120 und 121 gelagert. Diese Wickeldorne 120, 121 sind fest verbunden mit Schnellspulrädern 122, 123. Über Rutschkupplungen sind mit den Wickeldornen 120, 121 Spielräder 124, 125 verbunden.

In Fig. 3 ist dargestellt, wie das Spielrad 125 über das Schaltrad 114 von dem Zahnrad 112 angetrieben wird. In Fig. 4 ist auf ähnliche Weise zu sehen, wie das Spielrad 124 über das Zahnrad 117 vom Zahnrad 111 angetrieben wird.

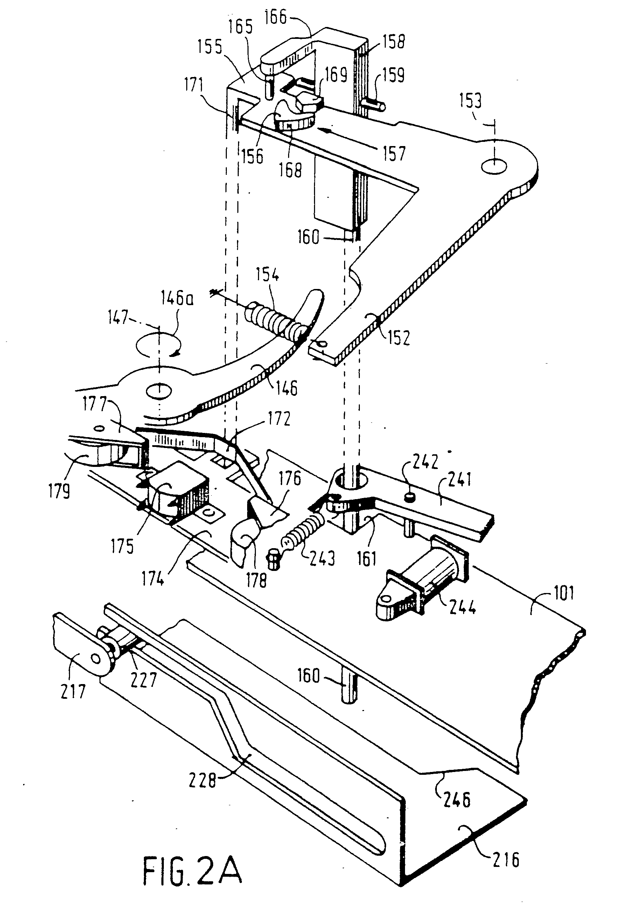

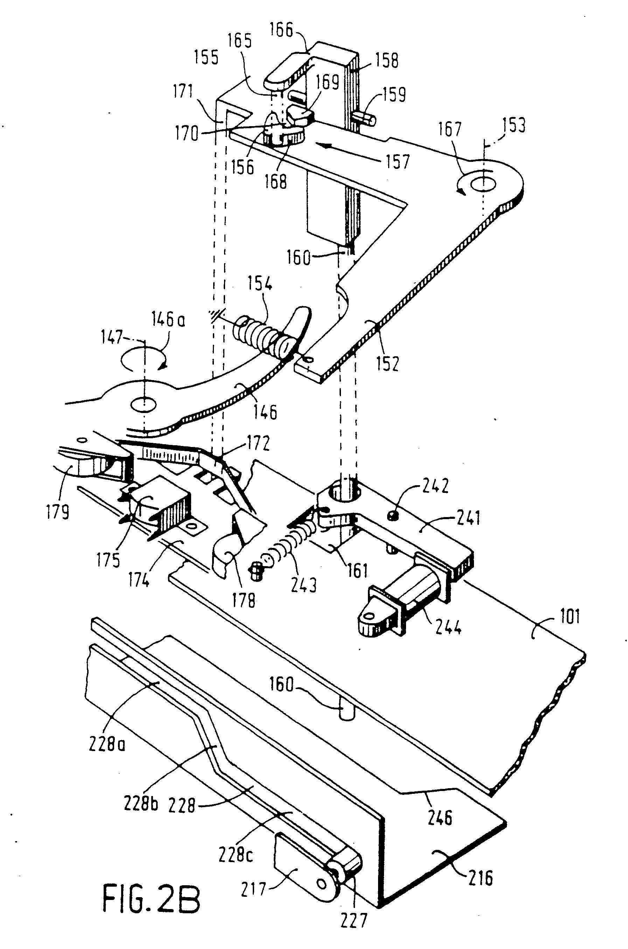

Ein Detektionsorgan 140, bestehend aus zwei Scheiben 141, 142 und einer Verbindungsstange 143, ist über Rutschkupplungen mit den Wickeldornen 120, 121 verbunden. Auf der Scheibe 142 ist ein Stift 144 angeordnet, der innerhalb einer Schaltgabel 145 liegt. Die Schaltgabel 145 ist an einem Schaltelement 146 angeordnet, die um ein Lager 147 drehbar ist (vergl. auch Fig. 2A und 2B). Das Schaltrad 114 trägt in seiner Mitte erhaben vorstehend einen ein wenig ellipsenförmigen Nocken 148. Das Schaltelement 146 greift über das Schaltrad 114 und trägt einen Stift 149, der bei nach innen geschwenktem Schaltelement 146 um den Nocken 148 herumfahren kann bei Drehung des Schaltrades in Richtung eines Pfeils 150. Um den Nocken 148 herum erstreckt sich in einem größeren Abstand eine erhaben aus dem Schaltrad 114 herausstehende, spiralförmige Steuerkurve 151. Auch diese Steuerkurve 151 kann mit dem Stift 149 an dem Schaltelement 146 zusammenwirken, und zwar immer dann, wenn das Detektionsorgan den Bandstillstand feststellt. In diesem Fall drückt der Stift 144 nicht mehr gegen die Schaltgabel 145, wodurch der Stift 149 am Schaltelement 146 nicht mehr nach innen in Richtung auf den Nocken 148 belastet wird, sondern stehen bleibt und bei fortgehender Drehung des Schaltrades 114 in Richtung des Pfeiles 150 auf die Außenseite der Steuerkurve 151 gelangt. Weil die Steuerkurve 151 spiralförmig ist, wird das Schaltelement 146 im Uhrzeigersinn (Pfeil 146a in Fig. 2A, 2B) um sein Lager 147 verschwenkt, wodurch das Schaltelement 146 gegen ein Verbindungselement 152 gedrückt wird.

Das Verbindungselement 152 ist ein doppelarmiger Hebel, der um ein Lager 153 schwenkbar ist. Wie aus den schaubildlichen Darstellungen in Fig. 2A und 2B zu erkennen ist, ist das Verbindungselement 152 aufgrund der Wirkung einer Feder 154 im Uhrzeigersinn federbelastet. Damit spannt die Bewegung des Schaltelementes 146 die Feder 154.

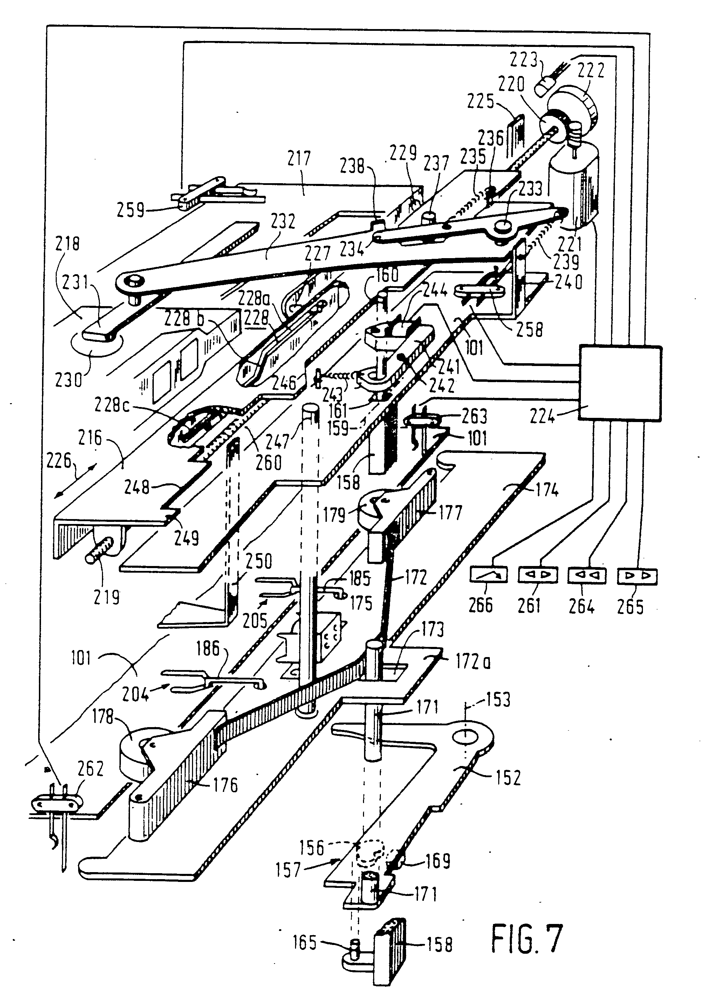

Der von dem Angriffspunkt des Schaltelementes 146 abgewandte Hebelarm 155 des Verbindungselementes 152 trägt eine Herzkurve 156, die zu einem Rastmechanismus 157 gehört. Zu dem Rastmechanismus 157 gehört auch ein Rasthebel 158, der um eine Achse 159 verschwenkbar zum Gestell ist. Die Achse 159 liegt parallel zu der Oberfläche des Gestells 101 und zu einer gedachten Verbindungslinie a zwischen den Tonwellen 109 und 110. Der Rasthebel 158 trägt auch einen Führungsstift 160, der in einem Loch 161 des Chassis 101 vorgesehen ist. Die Verstellung des Rasthebels um die Achse 159 wird später in Verbindung mit Fig. 7 erläutert.

Der Rasthebel 158 trägt einen Raststift 165, der in die Herzkurve 156 einfahrbar ist und die Herzkurve umfahren kann. Die Umfahrbarkeit wird z. B. über ein Filmgelenk 166 herbeigeführt. In Fig. 2A liegt der Stift 165 oberhalb der Herzkurve 156. In Fig. 2B ist der Stift 165 in den Bereich der Herzkurve 156 hineingefahren. Damit kann der Stift 165 mit der Herzkurve 156 zusammenwirken, wenn das Schaltelement 146 das Verbindungselement 152, wie in der Darstellung nach Fig. 2B, entgegen dem Uhrzeigersinn in Richtung eines Pfeiles 167 verschwenkt. Bei diesem Verschwenken ist der Stift 165 an einer Seitenwand 168 der Herzkurve 156 entlang gelaufen. Ein Führungsnocken 169 sorgt dafür, daß der Stift 165 in eine Mulde 170 der Herzkurve 156 einfällt.

Am Hebelarm 155 ist ein Nocken 171 angeordnet. Dieser Nocken 171 wirkt, wie sich aus den Fig. 3 und 4 ergibt, mit einer Blattfeder 172 zusammen und erstreckt sich durch einen Längsschlitz 173 im Gestell 101 hindurch. Die Blattfeder 172 drückt mit ihren freien Enden gegen Halterungen 176, 177, die auf einer Kopfplatte 174 gelagert und abgestützt sind. Diese Kopfplatte 174 trägt in ihrer Mitte einen Tonkopf 175 und beiderseits des Tonkopfes 175 die Halterungen 176, 177, in denen Andruckrollen 178, 179 gelagert sind. Die Halterungen werden gegen Anschläge 174a, 174b der Kopfplatte 174 gedrückt.

Die Kopfplatte 174 hat abgewinkelte Enden 180, 181. Das abgewinkelte Ende 180 weist einen Schlitz 182 auf, in dem ein Stift 183 verschiebbar ist, der auf dem Schwenkarm 116 befestigt ist. Dadurch ist in der Stellung nach Fig. 3 der Schwenkarm 116 derart um die Achse 115 verschwenkt, daß das Schaltrad 114 kämmt mit dem Spielrad 125 und dem Zahnrad 112. Dementsprechend ist in Fig. 4 dargestellt, daß das abgewinkelte Ende 181 der Kopfplatte 174 den Schwenkarm 119 um die Schwenkachse 118 geschwenkt hat, wodurch das Zahnrad 117 mit dem Spielrad 124 und dem Zahnrad 111 kämmt. Dementsprechend ist in der Stellung nach Fig. 3 die Druckrolle 179 gegen die Tonwelle 110 gedrückt, während in der Stellung nach Fig. 4 die Andruckrolle 178 gegen die Tonwelle 109 gedrückt ist.

In der Kopfplatte 174 sind parallel zu der Verbindungslinie a zwischen den Tonwellen 109, 110 Längsschlitze 184, 185 angeordnet, in denen Leitstifte 186, 187 verschiebbar sind.

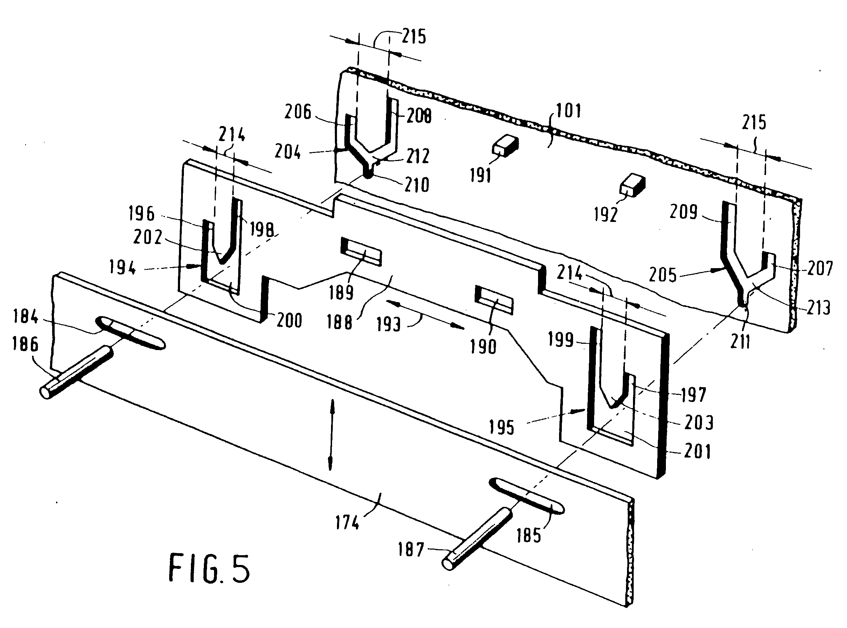

Fig. 5 zeigt anhand der Explosionsansicht in der Kopfplatte 174 geführte Leitstifte 186, 187, die in den Längsschlitzen 184, 185 geführt sind. Die Leitstifte sind damit parallel zu der Verbindungslinie a zwischen den Tonwellen verschiebbar. Die Halterung der Leitstifte 186, 187 an der Kopfplatte 174 ist in den Zeichnungen nicht näher dargestellt. Bei einer einfachen Ausführungsform sind die Leitstifte wie die Stifte von Reißnägeln an einer kappenförmigen Platte befestigt. Es ist aber ebensogut auch möglich, die Leitstifte an den freien Enden von federnden Zungen anzuordnen, die an der Kopfplatte 174 befestigt sind.

Zwischen der Kopfplatte 174 und der Chassisplatte an der Oberseite des Gestells 101 ist eine als Steuermittel dienende Steuerplatte 188 angeordnet. Diese Steuerplatte 188 ist mit Längsschlitzen 189, 190 versehen, durch die Führungsnocken 191, 192 der Chassisplatte hindurchgreifen. Dadurch ist die Steuerplatte 188 parallel zu der gedachten Verbindungslinie a zwischen den Tonwellen 109, 110 verschiebbar. Die Verschiebbarkeit ist in Fig. 5 durch einen Doppelpfeil 193 angegeben.

Die Steuerplatte 188 ist nahe beiden Enden mit U-förmigen Schlitzen 194, 195 versehen. Von den U-förmigen Schlitzen 194 und 195 ist jeweils ein Schenkel 196, 197 kürzer und ein Schenkel 198, 199 länger ausgebildet. Die kürzeren Schenkel sind voneinander weg angeordnet und die längeren Schenkel dementsprechend aufeinander zu. Die Verbindungsbasis 200 und 201 zwischen den kürzeren und längeren Schenkeln ist stark verbreitert ausgebildet. Zwischen den längeren und kürzeren Schenkeln sind Materialzungen 202 und 203 ausgebildet, die an ihren zur Basis 200, 201 gerichteten Enden angespitzt sind.

In der Chassisplatte des Gestells 101 sind als Leitschlitzanordnungen dienende gabelförmige Leitschlitze 204 und 205 angeordnet mit zwei den Gabelzinken entsprechenden Schenkeln, von denen jeweils einer 206, 207 kürzer als der andere 208, 209 ausgebildet sind. Am Gabelschaft ist ein mittiger Einlaufschlitz 210, 211 vorgesehen, der sich an den trichterförmigen Gabelfuß 212, 213 anschließt. Der gegenseitige Abstand 214 der Schenkel der U-förmigen Leitschlitze 194, 195 in der Steuerplatte 188 ist geringer als der gegenseitige Abstand 215 der Schenkel der gabelförmigen Leitschlitze 204, 205.

Die Kopfplattenverstellung arbeitet wie folgt:
Wird eine Kassette eingelegt, dann wird auf nicht dargestellte Weise der Schalter des Motors 103 geschlossen, und der Motor beginnt zu drehen. Damit drehen sich auch die Schwungscheiben 107 und 108, und zwar in gegensinniger Richtung. Gleichzeitig drehen sich die Zahnräder 111 und 112 und die mit ihnen kämmenden Zahnräder 114 und 117.

Der Rasthebel 158 wird aus der Lage nach Fig. 2A mit dem noch in Fig. 7 zu beschreibenden Mechanismus um die Achse 159 geschwenkt. Der Raststift 165 kommt in den Wirkbereich mit der Herzkurve 156 (Fig. 2B).

Weil die Zahnräder 114 und 117 nicht in Eingriff sind mit den Zahnrädern 124 und 125, drehen die beiden Wickeldorne 120 und 121 nicht mit. Die Scheiben 141 und 142 sind über ihre separaten Reibungskupplungen mit den Wickeldornen 120, 121 verbunden und stehen damit auch still. Da beim Eindringen der Kassette ein Drehmoment auf das Schaltelement 146 fehlt, weil die Bandwickel nicht umlaufen und das Band still steht, bleibt das Schaltelement 146 in der in Fig. 1 dargestellten Stellung stehen und kommt damit mit dem Stift 149 auf die Außenseite der Steuerkurve 151. Damit macht das Schaltelement 146 eine Bewegung im Uhrzeigersinn gemäß Pfeil 146a und schwenkt das Verbindungselement 152 entgegen dem Uhrzeigersinn (Pfeil 167). Weil der Rasthebel 158 geschwenkt und der Stift 165 im Wirkbereich der Herzkurve 156 ist, umläuft der Stift 165 nun die Wand 168 der Herzkurve 156 und fällt in die Mulde 170 ein. Damit ist das Verbindungselement in einer eingeschwenkten Stellung eingerastet (siehe Fig. 2B).

Durch das Schwenken des Verbindungselementes 152 entgegen dem Uhrzeigersinn in Richtung des Pfeiles 167 hat sich der Nocken 171 nach innen bewegt und gegen die Blattfeder 172 gedrückt. Die Blattfeder drückt ihrerseits über die Halterungen 176 und 177 gegen die Kopfplatte 174 und versucht, sie in Richtung auf die Tonwellen 109, 110 zu schieben. Nun kommt die Wirkung der Steuerplatte 188 zur Geltung.

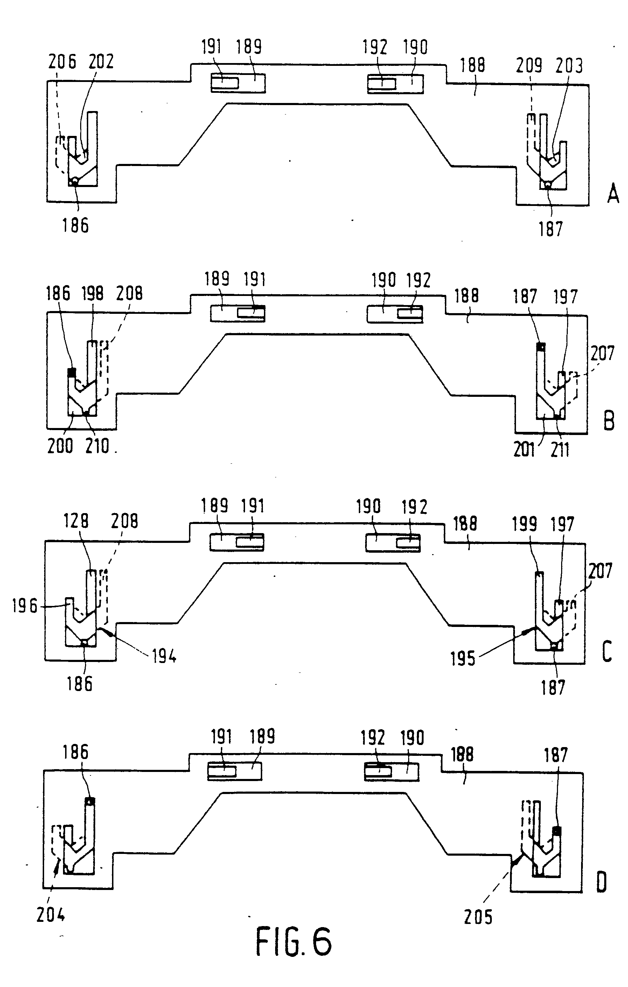

Vor dem Einschwenken des Nockens 171 war die Kopfplatte 174 von den Tonwellen weggefahren. Die Leitstifte 186, 187 waren dadurch in die Einlaufschlitze 210 und 211 eingelaufen (vergl. Fig. 5). Die Steuerplatte 188 hat die aus Fig. 6A zu ersehende angenommene Stellung. Beim Vorfahren der Kopfplatte 174 in Richtung der Tonwellen 109, 110 fahren die Leitstifte 186, 187 nach vorn und laufen auf die linken Seiten der Zungen 202, 203 auf und zugleich in die linken Schenkel 206 und 209 der gabelförmigen Leitschlitze 204, 205. Bei dem Einfahren der Leitstifte 186, 187 in die Schenkel 206 und 209 nehmen die Leitstifte 186, 187 die Steuerplatte 188 nach links mit, so daß sich nunmehr die Schenkel 196, 206 und 199, 209 überdecken. Der linke Leitstift 186 findet damit in dem kürzeren Schenkel beim Vorfahren einen Anschlag, während der rechte Leitstift 187 frei in Richtung auf die Tonwelle 110 vorlaufen kann (Fig. 2B). Damit schwenkt die vorgerückte Kopfplatte 174 auf der rechten Seite derartig nach vorn, daß die rechte Andruckrolle 179 gegen die rechte Tonwelle 110 stößt. Die andere Tonwelle bleibt unbelastet. Damit läuft das Band in der aus Fig. 3 zu ersehenden Richtung.

Beim Erreichen des Bandendes bleibt das Band stehen. Dadurch wird das Schaltelement 146 mit seinem Stift 149 erneut nach außen im Uhrzeigersinn geschwenkt. Dadurch wird das Verbindungselement 152 erneut entgegen dem Uhrzeigersinn verschwenkt (Fig. 2B) in Richtung des Pfeils 167. Das Verbindungselement 152 wird bei diesem Bewegen über den Normalhub, der bei der eingerasteten Lage vorliegt, in einem Überhub weitergeschwenkt. Der Überhub wird möglich, da der Nocken 171 gegen die Blattfeder 172 über die Halterungen 176, 177 an der Kopfplatte 174 drückt und damit Ausweichspielraum in Richtung auf die Kopfplatte hat. Bei diesem Überhub fährt der Stift 165 aus der Mulde 170 heraus, und der Rastmechanismus 157 entrastet. Unter Wirkung der Feder 154 schwenkt das entrastete Verbindungselement 152 nun im Uhrzeigersinn, so daß der Nocken 171 nach außen fährt. In dieser Lage ist die Kopfplatte nach außen zurückgefahren, und die Leitstifte 186, 187 sind wieder in die Einlaufschlitze 210 und 211 eingelaufen. Die Steuerplatte 188 ist in ihrer letzten Stellung verblieben. Die Zungen 202 und 203 liegen damit noch immer in einer nach links verschobenen Lage gegenüber der mittigen Lage der Einlaufschlitze 210 und 211 (Fig. 6).

Es kommt nun der Reversiervorgang. Das Schaltrad 114 dreht nach wie vor weiter. Da sich die Kopfplatte 174 zurückgezogen hat, hat sie ihr umgebogenes Ende 180 auch nach außen gezogen und damit den Schwenkarm 116 derart verschwenkt, daß das Schaltrad 114 außer Eingriff ist vom Spielrad 125. Damit wird das Spielrad 125 nicht mehr angetrieben. Das Detektionsorgan 140 stellt Bandstillstand fest. Aufs Neue wird das Schaltelement 146 im Uhrzeigersinn verschwenkt. Das Schaltelement 146 drückt gegen das Verbindungselement 152 und schwenkt dieses erneut entgegen dem Uhrzeigersinn in Richtung des Pfeiles 167. Damit umfährt der Stift 165 erneut die Herzkurve 156, und der Stift fällt letztlich wieder in die Mulde 170 ein und verrastet das Verbindungselement 152. Der Nocken 171 ist nun wieder nach vorn geschoben, und die Kopfplatte 174 nimmt nach ihrem Vorfahren die aus Fig. 4 ersichtliche Stellung ein. Das Zahnrad 117 ist über das umgebogene Ende 181 der Kopfplatte 174 mit dem Zahnrad 111 und mit dem Spielrad 124 im Eingriff. In dieser Lage nach Fig. 4 liegt die Andruckrolle 178 an der Tonwelle 109 an, und das Band wird in entgegengesetzter Richtung transportiert.

Die Umkehrung der Bandtransportrichtung ist wieder durch die Leitschlitzanordnung bewirkt worden, die in Fig. 6 in verschiedenen Stellungen dargestellt ist. Die letzte beschriebene Stellung war die Stellung nach Fig. 6C. In dieser Stellung ist die Steuerplatte 188 nach links verschoben, und die Leitstifte 186, 187 liegen in den Einlaufschlitzen 210 und 211. Durch das erneute Vorfahren der Kopfplatte 174 sind die Leitstifte 186, 187 ebenfalls nach vorn gefahren und sind gegen die rechten Schrägflächen der angespitzten Zungen 202 und 203 gelaufen. Die Leitstifte 186, 187 wurden dadurch nach rechts verschoben und konnten weiter einfahren in die Schenkel 208 und 207. Die Querverbindung der Leitstifte 186, 187 ist möglich durch das Verrutschen der Leitstifte 186, 187 in den Längsschlitzen 184, 185. Bei dem Einfahren in die Schenkel 207 und 208 haben die Leitstifte 186, 187 die Steuerplatte 188 nach rechts mitgenommen, so daß sich nunmehr die Schenkel 208 und 198 sowie 207 und 197 überdecken. Damit haben sich die Zungen 202, 203 wieder so versetzt, daß bei einem erneuten Zurückfahren und Vorfahren der Leitstifte diese dann wieder auf die linken Schrägflächen der angespitzten Zungen 202 und 203 auflaufen können. Die Stellung der Leitschlitzanordnung in diesem Fall ist aus Fig. 6D zu ersehen. Der Leitstift 187 hat in den kürzeren Schenkeln 207 und 197 auf seinem Vorfahrweg einen Anschlag vorgefunden, der die Kopfplatte 174 daran hindert, auf der rechten Seite weiter vorzufahren. Auf der linken Seite hat der Leitstift 186 keinen Anschlag vorgefunden, und er konnte in den Schenkeln 208 und 198 so weit vorfahren, daß die Feder 172 auf der linken Seite der Kopfplatte 174 die Andruckrolle 178 gegen die Tonwelle 109 drücken konnte. Diese Stellung ist aus Fig. 4 zu ersehen.

Zu dem in Fig. 7 dargestellten Servomechanismus gehört eine Steuerstange 216, die seitlich eines Kassettenliftes 217 in Längsrichtung im Gestell 101 verschieblich ist. Die Längsrichtung ist die Einzieh- und Auswurfrichtung der Kassette 218. Die Steuerstange 216 wird verschoben mit Hilfe einer Gewindespindel 219. Diese Gewindespindel wird über ein Schneckengetriebe 220 angetrieben von einem reversierbaren Servomotor 221. Auf der Gewindespindel 219 ist ein bipolarer Magnet 222 befestigt. Dieser Magnet kann ein Hall-IC 223 in verschiedene Schaltzustände versetzen und diese damit steuern. Das Hall-IC 223 ist mit einer Steuerschaltung 224 nach Art eines Mikroprozessors verbunden. Auch der Servomotor 221 steht in Verbindung mit der Steuerschaltung 224. Ein Anschlag 225 auf dem Gestell 101 begrenzt die Schiebebewegung der Steuerstange 216. Der Anschlag ist von der Schaltvorrichtung 224 als Endstellungsmarkierung der Steuerstange 216 in Richtung eines Doppelpfeiles 226 erkennbar, an der alle Steuerstangenhübe referieren.

Der Lift 217 ist mit Hilfe eines Stiftes 227 höhengesteuert geführt in einer Kulisse 228 der Steuerstange 216. Außerdem ist der Lift um eine Achse 229 zum Gestell schwenkbar. Ein erster Teil 228a der Kulisse erstreckt sich parallel zum Chassis 101, knickt danach in einem Bereich 228b ein Stück nach unten ab und verläuft dann im Bereich 228c in einem dritten Teil wieder parallel zum Kulissenteil 228a und in Bewegungsrichtung der Steuerstange 216 nach Doppelpfeil 226.

In ein Wickeldornloch 230 der Kassette 218 greift ein Mitnehmer 231 ein, sobald die Kassette bis zu ihm in das Gerät eingeschoben ist. In dieser Position steht die Kassette etwa noch 10 mm aus dem Gerät heraus. Der Mitnehmer 231 ist schwenkbar verbunden mit einem Auswerfer 232, der um eine Achse 233 des Chassis 101 schwenkbar gelagert ist. Oberhalb des Auswerfers 232 ist ebenfalls um die Achse 233 schwenkbar ein Hilfshebel 234 drehbar. Dieser Hilfshebel 234 ist mittels einer Zugfeder 235 gegenüber einem Haken 236 zum Auswerfer 232 verspannt. Auf der Steuerstange 216 ist ein Stift 237 angeordnet, gegen den der Hilfshebel 234 in der Stellung nach Fig. 7 gezogen werden kann. Mit einem vorderen freien Ende kann der Hilfshebel 234 gegen eine Abkantung 238 am Auswerfer 232 drücken. Eine weitere Zugfeder 239 am anderen freien Ende des Hilfshebels 234 zieht dieses freie Ende im Uhrzeigersinn in Richtung auf einen Haken 240 des Chassis 101.

Der Rasthebel 158 greift mit seinem Stift 160 durch das Loch 161 und durch einen Riegelhebel 241 hindurch. Der Riegelhebel 241 ist schwenkbar um eine Achse 242 und wird mit Hilfe einer Feder 243 von einem Rigelmagneten 244 weggeschwenkt. Der Stift 160 kann auf eine Kulisse 246 auflaufen. Der Riegelmagnet 244 ist mit der Steuerschaltung 224 elektrisch verbunden.

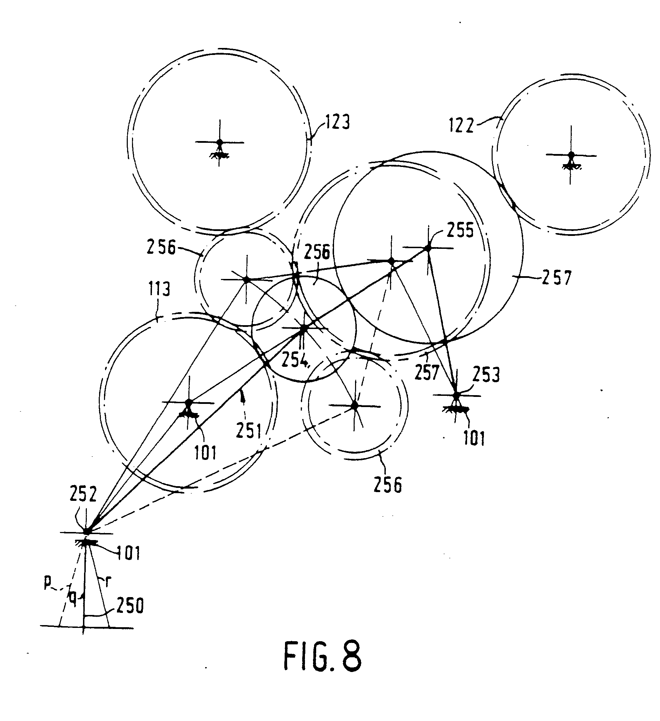

An der Kopfplatte 174 ist ein Stift 247 angeordnet, der gegen eine Anschlagkante 248 der Steuerstange 216 auflaufen kann. Ein weiterer Anschlag 249 an der Steuerstange 216 arbeitet mit einem Hebel 250 zusammen, der den Schnellspulmechanismus nach Fig. 8 betätigt.

Der Schnellspulmechanismus nach Fig. 8 arbeitet mit den Schnellspulrädern 122 und 123 zusammen; er besteht aus einem Stangen-Viereck 251. Dieses Stangen-Viereck 251 ist an seinen Enden gelenkig in Gelenkpunkten 252 und 253 mit dem Gestell 101 verbunden. Die anderen beiden Gelenkpunkte 254 und 255 dienen als Lagerachsen für zwei Getrieberäder 256 und 257. Das Getrieberad 256 ist dabei kleiner als das Getrieberad 257. Der Hebel 250 ist mit Hilfe einer nicht dargestellten Feder derart vorgespannt, daß er in seiner Grundstellung die linke Position p einnimmt. Aus dieser linken Position p ist er verschwenkbar über die Position q zur Position r, und zwar mit Hilfe der Steuerstange 216, die gegen den Hebel 215 mit Hilfe des Anschlages 249 drückt. In der Stellung p für Spielbetrieb liegt das kleine Zahnrad 256 frei vom Antriebszahnrad 113. Das Zahnrad 257 berührt keines der Schnellspulräder 122 oder 123. In der Stellung q berührt das kleine Zahnrad 256 das Zahnrad 113 und das Zahnrad 157 das Schnellspulrad 122. In dieser Stellung wird der Wickeldorn 121 schnell angetrieben. In der Stellung r verbindet das kleine Zahnrad 256 das Zahnrad 113 mit dem Schnellspulrad 123. Damit ist der Wickeldorn 120 schnell angetrieben.

Wird die Kassette 218 in das Gerät eingeschoben und ist der Mitnehmer 231 in das Wickeldornloch 230 eingerastet, dann wird die Kassette festgehalten. Einer Bewegung stellt sich eine deutliche Gegenkraft entgegen.

Schiebt man nun die Kassette 218 etwas weiter gegen die ansteigende Gegenkraft (ca. 2 mm weit) ein, dann wird der Auswerfer 232 etwas um die Achse 233 verschwenkt, und er schließt dabei einen Auswurfschalter 258, der mit der Steuerschaltung 224 verbunden ist. Vorausgesetzt, das Gerät ist elektrisch eingeschaltet, wird jetzt der Servomotor 221 in Umlauf gesetzt, und die Steuerstange 216 wird über die Gewindespindel 219 nach rechts gemäß Doppelpfeil 226 verfahren. Die Drehbewegung der Gewindespindel 219 wird von dem Hall-IC 223 festgestellt, und der Weg der Steuerstange wird damit von der Steuerschaltung 224 gemessen. Der Stift 237 fährt damit ebenfalls nach rechts, und der Hilfshebel 234 kann nun im Uhrzeigersinn, von der Feder 239 angezogen, verschwenken. Damit nimmt der Hilfshebel 234 über die Abkantung 238 den Auswerfer im Uhrzeigersinn mit, und die Kassette 218 wird eingezogen. Die Kassette 218 wird so weit eingezogen, bis sich ein Kassettenschalter 259 schließt, der ebenfalls mit der Steuerschaltung 224 verbunden ist. Dieser Schalter dient der Vermeidung von Fehlfunktionen bei unsachgemäßem Einlegen der Kassette. Sind beide Schalter 258 und 259 geschlossen, dann fährt die Steuerstange 216 weiter nach rechts, und der Lift wird über den Stift 227 in der Kulisse 228 abgesenkt. Die Steuerstange 216 läuft weiter so weit nach rechts, bis sie gegen den Anschlag 225 stößt. In dieser Position hat die Kulisse 246 den Stift 160 nach rechts gedrückt, womit sich der Riegelhebel 241 an den Riegelmagneten 244 angelegt hat. Der Riegelmagnet 244 ist erregt und hält jetzt den Riegelhebel 241 fest. Bei dieser Bewegung ist der Rasthebel 158 mit verschwenkt, und der Stift 165 ist in den Rastmechanismus 157 eingefahren. Damit kann der Stift 165 mit der Herzkurve 156 zusammenwirken.

Durch das Ausbleiben von Impulsen an dem Hall-IC 223 wird das mechanische Anschlagen der Steuerstange 216 gegen den Anschlag 225 registriert, weil die Spindel 219 stillsteht. Der Servomotor 221 wird nun von der Steuerschaltung 224 umgesteuert und läuft in Gegenrichtung wieder an, bis eine Aussparung 260 vor den Stift 247 gelangt. Dies entspricht der Spielposition nach Fig. 3 und 4. Jetzt läuft der Laufwerksmotor 103, angesteuert durch die Steuerschaltung 224, an. Dies führt zunächst dazu, daß bei noch stillstehenden Wickeldornen, wie in Fig. 2B beschrieben, das Verbindungselement 152 in Richtung des Pfeiles 167 schwenkt und mittels des Stiftes 165 in der eingeschwenkten Stellung verriegelt wird. Bei diesem Schwenken in Richtung des Pfeiles 167 ist die Kopfplatte 174 in Richtung auf das Magnetband verfahren worden, und eine der Andruckrollen 178 hat sich an die ihr zugeordnete Tonwelle angelegt, wie in den Fig. 5 und 6 beschrieben ist. Nun wird der Bandtransport in Betrieb gesetzt.

Das Inbetriebsetzen in der vorbeschriebenen Weise läßt sich auch anders bewirken durch das Eindrücken einer mit der Schaltvorrichtung 224 elektrisch verbundenen Spieltaste 261, die den Auswurfschalter 258 kurzschließt. Dadurch wird, wie bei dem automatischen Einzug, der Servomotor 221 in Betrieb gesetzt.

Für den Auto-Reverse-Betrieb bleibt das Band beim Erreichen des Bandendes stehen. Nun wird der Richtungswechselvorgang eingeleitet mit Hilfe des Verbindungselementes 152 und der Steuerplatte 188. Bei diesem Richtungswechselvorgang fällt die Kopfplatte 174 heraus und wird wieder erneut eingefahren, wobei, beschrieben wie in den Fig. 5 und 6, die Schwenklage der Kopfplatte geändert wird, so daß nun der bisher nicht angetriebene Spulenkern nunmehr angetrieben wird. Es ist ohne weiteres auch ein Reverse-Betrieb während des normalen Spielbetriebes per Hand zu erreichen. Dazu wird durch kurzes Eindrücken der Taste 261 der Riegelmagnet 244 abgeschaltet, und der Riegelhebel 241 fällt ab unter Wirkung der Feder 243. Der Stift 160 kippt damit in der Zeichnung nach Fig. 7 nach links. Damit wird der Rastmechanismus 157 entrastet, weil der Stift 165 aus seinem Wirkbereich herausfährt. Dadurch kann die Kopfplatte 174 ausfahren. Der Laufwerksmotor 103 bleibt nun stehen, bis der Servomotor 22 die Steuerstange 216 einmal gegen den Anschlag 225 und wieder zurückgefahren hat in die Spielstellung. Während dieser Bewegung hat die Kulisse 246 den Riegelhebel 241 wieder an den Riegelmagneten 244 angeklebt. Der Rastmechanismus 157 ist durch das Einfahren des Stiftes 165 wieder in Funktion gebracht worden. Die Steuerschaltung 224 setzt wieder den Laufwerksmotor in Betrieb. Das Verbindungselement 152 wird wieder verschwenkt und die Kopfplatte 174 eingefahren. Dabei hat sich zugleich die Bandlaufrichtung umgekehrt mit Hilfe der Steuerplatte 188 nach Fig. 5.

Zum Schnellspulen wird, abhängig von der Richtung, eine der mit der Steuerschaltung elektrisch verbundenen Schnellspultasten 264, 265 gedrückt. Damit wird der Riegelmagnet 244 abgeschaltet über die Steuerschaltung 224. Der Servomotor 221 verschiebt nun die Steuerstange 216 wieder in Richtung auf den Anschlag 225 und wieder zurück. Während dieser Bewegungen wird der Riegelhebel 241 wieder an den aufs Neue erregten Riegelmagneten 244 angeklebt. Damit schiebt der Anschlag 249 den Hebel 250 in die entsprechende Schnellspullage q oder r in Fig. 8 in Abhängigkeit von der Lage des Anschlages 249. Der Stift 247 ist dabei gegen die Kante 248 gelaufen und sichert, daß die Kopfplatte 174 nicht ganz vorgeschoben werden kann, sondern in einer Position liegen bleibt, wo die Andruckrollen 178, 179 frei sind von den Tonwellen. Diese Position ist auch geeignet für das Schnell-Aufsuchen von gewünschten Stellen auf dem Magnetband. Hierzu braucht man nur die Tasten 264, 265 anzutippen.

Beim Betätigen einer elektrischen Auswurftaste 266 wird der Riegelmagnet 244 entregt, und der Riegelhebel 241 fällt ab. Der Servomotor 221 fährt die Steuerstange 216 ganz aus nach links, wodurch der Stift 237 den Auswerfer 232 entgegen dem Uhrzeigersinn verschwenkt. Damit wird die Kassette 218 ausgeschoben, bis sich der Schalter 258 geöffnet hat.

Es sind noch zwei weitere Schalter 262 und 263 vorgesehen, die von der Kopfplatte 174 betätigt werden können in Abhängigkeit von der Schwenklage der Kopfplatte 174 gemäß Fig. 3 und 4. Dabei ist immer einer der beiden Schalter 262 oder 263 geschlossen und sind die entsprechenden Spuren des Magnetkopfes 175 wirksam.

Sind beim Ausschalten des Gerätes noch beide Schalter 258 und 259 geschlossen, weil noch eine Kassette 218 eingeschoben ist, hat die Steuerschaltung 224 die Möglichkeit, beim erneuten Einschalten die letztgewählte Bandlaufrichtung wiederzuerkennen und das Band in der richtigen Richtung zu transportieren. Hierbei sorgt die Steuerschaltung 224 beim erneuten Einschalten dafür, daß die Steuerstange 216 bis zum Anschlag 225 vor- und wieder bis in die Spielposition zurückfährt. Hierbei ist die Kopfplatte 174 auf die in den Fig. 5 und 6 beschriebene Weise zweimal vorgefahren, wodurch die ursprüngliche Spielstellung wieder erreicht wurde.

## Patentansprüche

1. Steuervorrichtung für das Laufwerk eines Magnetbandkassettengerätes zum Steuern von Laufwerksfunktionen einschließlich des Einziehens und Auswerfens einer Kassette mittels eines mit einem Motor (221) ausgerüsteten Antriebes, der eine von dem Motor (221) in Einschub- bzw. Ausschubrichtung der Kassette längsverschiebliche, mit Schaltern zusammenwirkende Stange (216) umfaßt, wobei auf mechanische Weise Laufwerksfunktionen einstellbar sind, dadurch gekennzeichnet, daß

der Motor (221) als Servomotor reversierbar ausgebildet ist und von einer Mikroprozessor-Steuerschaltung (224) gesteuert wird,

zwischen den Endpunkten der Bewegungsbahn der Steuerstange im Abstand voneinander liegende weitere, von einem mit der Steuerstange zusammenwirkenden Schaltgeber markierte Schaltpunkte für Spiel- und Schnellspulfunktionen vorgesehen sind, an denen die Steuerstange ihrerseits über den Schaltgeber und die Schaltung (224) Laufwerksfunktionen in Betrieb setzt,

die Steuerstange beim Anhalten an den Schaltpunkten die diesen zugeordneten Laufwerksfunktionen in Betrieb setzt,

die Steuerstange (216) bei der Einstellung einer neuen Laufwerksfunktion zu ihrer genauen Lagebestimmung zuerst zum Referenz-Endpunkt (225) am Ende des Einfahrweges läuft, dort die Mikroprozessor-Steuerschaltung (224) bezüglich der Stellung der Steuerstange orientiert und zu den gewünschten Schaltpunkten zurückläuft.

2. Vorrichtung nach Anspruch 1, dadurch gekennzeichnet, daß der Referenz-Endpunkt (225) von einem Anschlag (225) gebildet wird, der die Schiebebewegung der Steuerstange (216) begrenzt.

3. Vorrichtung nach Anspruch 1, dadurch gekennzeichnet, daß die Steuerstange (216) mit einer Kulisse (246) versehen ist, mittels der ein Rastmechanismus (157) für die Kopfträgerplatte (174) wirksam bzw. unwirksam machbar ist.

4. Vorrichtung nach Anspruch 3, dadurch gekennzeichnet, daß ein Riegelmagnet (244) vorgesehen ist, der einen Rasthebel (158) nach seinem Verstellen mittels der Kulisse (246) in der Wirkstellung für den Rastmechanismus (157) festhält.

5. Vorrichtung nach Anspruch 1, dadurch gekennzeichnet, daß parallel zur Verschieberichtung (226) der Steuerstange (216) eine vom Servomotor (221) gedrehte Gewindespindel (219) angeordnet ist, mittels der die Steuerstange (216) in ihre Betriebspositionen verfahrbar ist.

6. Vorrichtung nach Anspruch 2, dadurch gekennzeichnet, daß mit der Gewindespindel (219) ein Magnet (222) umläuft, dessen Felder von einem als Schaltgeber wirkenden Hallelement (223) aufgenommen und an die Steuerschaltung (224) weitergegeben werden, die dadurch in der Lage ist, die Rotationen der Spindel zu zählen.

7. Vorrichtung nach Anspruch 1, dadurch gekennzeichnet, daß die Steuerstange (216) mit einem Steueranschlag (249) versehen ist, der abhängig von seiner Lage ein Schnellspulgetriebe (256, 257) steuert.

8. Vorrichtung nach Anspruch 7, dadurch gekennzeichnet, daß die Steuerstange (216) eine Anschlagkante (248) aufweist, die die Bewegung der Kopfplatte (174) in Richtung auf das Magnetband begrenzt für die Zeit, in der Schnellspulfunktionen ausgeübt werden.

## Claims

1. A control device for the tape deck of a magnetic-tape-cassette apparatus for controlling tape-deck functions, including loading and ejection of a cassette, by means of a drive mechanism comprising a motor (221) and a rod (216) constructed to cooperate with switches and to be axially movable by the motor (221) in the directions of loading and ejection of the cassette, which tape-deck functions can be set mechanically, characterized in that

the motor (221) is constructed as a reversible servomotor and is controlled by a microprocessor control circuit (224),

spaced-apart further switching points for play and fast-wind functions are provided between the end points of the path of movement of the actuating rod and are marked by means of a switching source which cooperates with the actuating rod, at which further switching points the actuating rod activates tape-deck functions via the switching source and the circuit (224),

when stopped at the switching points the actuating rod activates the tape-deck functions assigned to said points,

when a new tape-deck function is to be set the actuating rod (216) first moves to the reference end point (225) at the end of its inward path so as to obtain an exactly defined position where the microprocessor control circuit (224) is oriented with respect to the position of the actuating rod, and returns to the desired switching points.

2. A device as claimed in Claim 1, characterized in that the reference end point (225) is materialized by a stop (225) which limits the axial movement of the actuating rod (216).

3. A device as claimed in Claim 1, characterized in that the actuating rod (216) comprises a guide surface (246) by means of which a latching mechanism (157) for the head-mounting plate (174) can be activated and deactivated.

4. A device as claimed in Claim 3, characterized in that there is provided a locking magnet (244), which holds a latching lever (158) in the operating position for the latching mechanism (157) after said lever has been positioned by means of the guide surface (246).

5. A device as claimed in Claim 1, characterized in that a threaded spindle (219) which is rotated by the servo motor (221) is arranged parallel to the direction of movement (226) of the actuating rod (216) to move the actuating rod (216) to its operating positions.

6. A device as claimed in Claim 2, characterized in that a magnet (222) revolves with the threaded spindle (219), whose fields are detected by a Hall element (223) operating as a switching source and are transferred to the control circuit (224), which can thus count the revolutions of the spindle.

7. A device as claimed in Claim 1, characterized in that the actuating rod (216) is provided with an actuating stop (249) which depending on its position actuates a fast-wind mechanism (256, 257).

8. A device as claimed in Claim 7, characterized in that the actuating rod (216) comprises a stop edge (248) which limits the movement of the head-mounting plate (174) towards the magnetic tape while fast-wind functions are performed.

## Revendications

1. Dispositif de commande pour le système d'entraînement d'un appareil à cassette de bande magnétique en vue de la commande des fonctions du système d'entraînement, y compris l'introduction et l'éjection d'une cassette à l'aide d'un dispositif d'entraînement équipé d'un moteur (221), qui comprend une tige (216) coopérant avec des commutateurs et pouvant être déplacée longitudinalement par le moteur (221) dans le sens de l'introduction et de l'éjection de la cassette, les fonctions du système d'entraînement pouvant être établies par voie mécanique, caractérisé en ce que :

le moteur (221) est un servomoteur réversible et est commandé par un circuit de commande à microprocesseur (224),

entre les points d'extrémité du trajet de la tige de commande sont prévus d'autres points de commutation espacés les uns des autres, pour des fonctions de lecture et de bobinage rapide, marqués par un transmetteur de commutation coopérant avec la tige de commande, auxquels la tige de commande active de son côté les fonctions du système d'entraînement par l'intermédiaire du transmetteur de commutation et du circuit (224),

lors de son arrêt aux points de commutation, la tige de commande active les fonctions du système d'entraînement qui y sont associées,

lors du réglage d'une nouvelle fonction du système d'entraînement, en vue de la détermination précise de sa position, la tige de commande (216) se déplace tout d'abord jusqu'au point d'extrémité de référence (225) à la fin du trajet d'introduction, y oriente le circuit de commande à microprocesseur (224) pour ce qui concerne la position de la tige de commande et revient ensuite aux points de commutation souhaités.

2. Dispositif suivant la revendication 1, caractérisé en ce que le point d'extrémité de référence (225) est formé par une butée qui limite le mouvement de coulissement de la tige de commande (216).

3. Dispositif suivant la revendication 1, caractérisé en ce que la tige de commande (216) est pourvue d'une coulisse (246) à l'aide de laquelle un mécanisme d'encliquetage (157) pour la plaque porte-tête (174) peut être rendu actif ou inactif.

4. Dispositif suivant la revendication 3, caractérisé en ce qu'est prévu un aimant de verrouillage (244) qui immobilise un levier d'encliquetage (158) dans sa position active pour le mécanisme d'encliquetage (157), après son déplacement à l'aide de la coulisse (246).

5. Dispositif suivant la revendication 1, caractérisé en ce que, parallèlement à la direction de déplacement (226) de la tige de commande (216), est prévue une tige filetée (219) entraînée en rotation par le servomoteur (221), à l'aide de laquelle la tige de commande (216) peut être déplacée dans ses positions de fonctionnement.

6. Dispositif suivant la revendication 2, caractérisé en ce qu'un aimant (222) tourne avec la tige filetée (219), les champs de cet aimant étant captés par un élément de Hall (223) servant de transmetteur de commutation et étant transmis au circuit de commande (224) qui est ainsi à même de compter les révolutions de la tige filetée.

7. Dispositif suivant la revendication 1, caractérisé en ce que la tige de commande (216) est pourvue d'une butée de commande (249) qui commande un mécanisme de bobinage rapide (256, 257) en fonction de sa position.

8. Dispositif suivant la revendication 7, caractérisé en ce que la tige de commande (216) présente un bord de butée (248) qui limite le déplacement de la plaque porte-tête (174) en direction de la bande magnétique pour le temps pendant lequel des fonctions de bobinage rapide sont exécutées.

FIG.1

EP 0 095 815 B1

FIG. 2A

FIG.2B

3

FIG.3

EP 0 095 815 B1

FIG.4

FIG.5

FIG. 6

7

FIG. 7

FIG. 8